(19) **Europäisches Patentamt / European Patent Office / Office européen des brevets**

(11) **EP 1 700 665 B1**

(12) **EUROPEAN PATENT SPECIFICATION**

(45) Date of publication and mention
of the grant of the patent:
**01.06.2016 Bulletin 2016/22**

(51) Int Cl.:
**B23K 26/04** *(2006.01)*     **G02B 27/00** *(2006.01)*

(21) Application number: **06004645.5**

(22) Date of filing: **07.03.2006**

(54) **Laser apparatus**

Laservorrichtung

Dispositif laser

(84) Designated Contracting States:
**DE**

(30) Priority: **09.03.2005   JP 2005065161**

(43) Date of publication of application:
**13.09.2006   Bulletin 2006/37**

(73) Proprietor: **FANUC CORPORATION**
**Oshino-mura**
**Minamitsuru-gun**
**Yamanashi 401-0597 (JP)**

(72) Inventors:
• **Mori, Atsushi**
**Minamitsuru-gun**
**Yamanashi 401-0301 (JP)**
• **Okazaki, Ryoma**
**Room7-205**
**Minamtisuru-gun**
**Yamanashi 401-0511 (JP)**

(74) Representative: **Schmidt, Steffen J.**
**Wuesthoff & Wuesthoff**
**Patentanwälte PartG mbB**
**Schweigerstrasse 2**
**81541 München (DE)**

(56) References cited:
**GB-A- 2 354 845**

• **PATENT ABSTRACTS OF JAPAN vol. 1995, no. 10, 30 November 1995 (1995-11-30) & JP 07 185860 A (MATSUSHITA ELECTRIC IND CO LTD), 25 July 1995 (1995-07-25)**
• **PATENT ABSTRACTS OF JAPAN vol. 1995, no. 10, 30 November 1995 (1995-11-30) & JP 07 185861 A (MATSUSHITA ELECTRIC IND CO LTD), 25 July 1995 (1995-07-25)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to a laser apparatus including: a laser beam oscillator for outputting a laser beam by exciting a gas or exciting a solid medium; and a laser machine for conducting laser beam machining, such as laser beam cutting, by the laser beam outputted from the laser beam oscillator.

2. Description of the Related Art

A carbon dioxide gas laser is used in the laser apparatus as a representative high-power laser. It is difficult to pass carbon dioxide gas laser beams through optical fibers because of the output and wave-length of the laser beams. Carbon dioxide gas laser beams output by a laser beam oscillator are propagated in a space and guided to a work. The work is processed by the thus propagated laser beams. In the case of other high-power lasers, the laser beams output by the high-power laser are propagated in a space and guided to a work in some cases because of the wave-length.

In a laser apparatus, in order to conduct scanning by the laser beams upon the entire region of a work to be machined, an optical path length is changed, that is, a distance between the laser beam oscillator and the condensing optical system is changed. This is advantageous in that a diameter of a laser spot on the work is constant even when the optical path length is changed. Due to the foregoing, laser beam machining can be uniformly conducted on the entire region of the work to be machined. On the contrary, in the case where the diameter of the laser spot on the work is changed, the result of laser beam machining is changed corresponding to a position of the region on the work to be machined, which is disadvantageous in that the machining capacity of the laser apparatus is restricted.

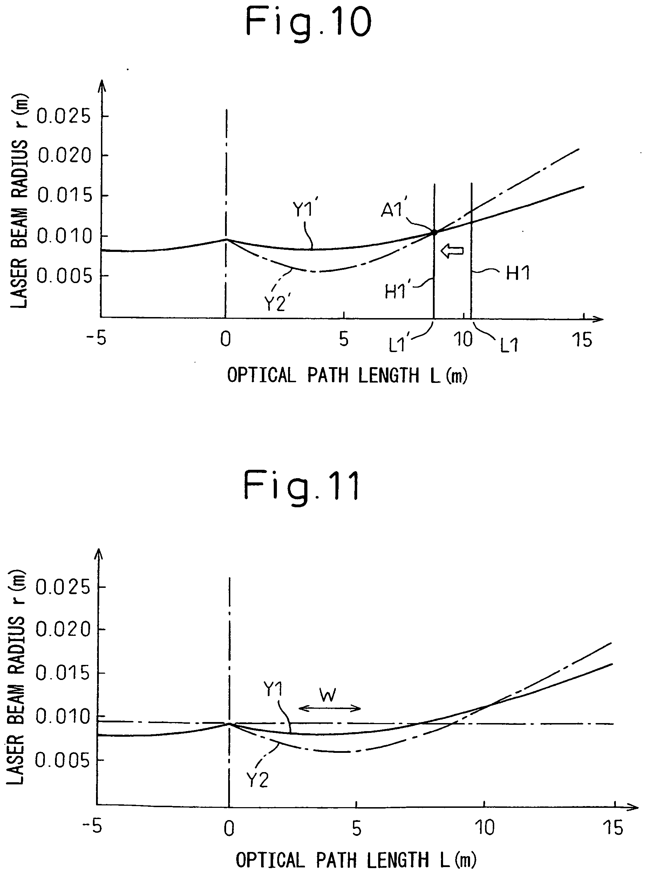

In this connection, Fig. 11 is a view showing a relation between the optical path length and the laser beam radius in the laser apparatus of the prior art. In Fig. 11, the origin O of the axis of abscissa, which shows an optical path length, is a position of a permeable output mirror of the laser beam oscillator in the laser apparatus. Accordingly, a positive region on the axis of abscissa shows an optical path length of the laser beams output by the laser beam oscillator. As can be understood from the curve Y1 which shows behavior of the laser beam radius r at the time of the start of laser beam machining, the laser beam radius r of the laser beams outputted from the output mirror of the laser beam oscillator at the origin decreases and then increases to exceed the laser beam radius r at the time of output. The region, in which the laser beam radius r decreases after output as described above, is referred to as a beam waist W.

Usually, laser beams which have been propagated in a space are condensed by a condensing optical system, that is, a condensing lens, so that the work is processed in a state of high energy density. At this time, in order to uniformly machine the work, it is desired that a laser beam spot diameter is maintained substantially constant all over the region of the work to be machined. As shown in Fig. 11, fluctuations of the laser beam radius r are relatively small in the beam waist W. Therefore, the condensing optical system is usually arranged in the beam waist W. By moving the condensing optical system back-and-forth on the axis of abscissa in the beam waist W, the optical path length is changed. Due to the foregoing, an outer diameter of the laser beams incident upon the condensing optical system is maintained constant. Concerning this technique, refer to Japanese Examined Patent Publication No. 4-36794, Japanese Unexamined Patent Publication No. 8-112687, Japanese Unexamined Patent Publication No. 7-185860 and Japanese Unexamined Patent Publication No. 7-185861.

However, in the case where the laser apparatus is continuously used at a relatively high power, for example, at a high power exceeding 1 kW, a permeable output mirror is heated by the laser beams passing through the center of the output mirror. The laser beams heat the output mirror from the center. On the other hand, the output mirror is cooled from its periphery by cooling water which is sent from a cooling water circulating system in the laser apparatus. Therefore, when a sufficiently long period of time has passed from the output of the laser beams, a temperature gradient is generated in which a temperature of the output mirror is gradually decreased from the central portion of the output mirror toward the outer circumferential portion of the output mirror. As a result, the central portion of the output mirror is expanded more than the outer circumferential portion of the output mirror. Further, an index of refraction, which is strongly affected by the temperature, is increased at the central portion of the output mirror compared to the outer circumferential portion of the output mirror. Due to the foregoing, a so-called thermal lens effect is generated, by which a focal distance of the output mirror is decreased as compared with the focal distance of the output mirror in the state of normal temperature.

The curve Y2 in Fig. 11 shows the behavior of the laser beam radius r after a sufficiently long period of time has passed for generating the thermal lens effect after the start of laser beam machining. The laser beam radius r of the curve Y2 after the sufficiently long period of time has passed for generating the thermal lens effect is smaller than the laser beam radius r of the curve Y1 at the time of starting laser beam machining. In other words, the beam waist W in Fig. 11 is further reduced by the generation of the thermal lens effect.

In the condensing optical system shown in each of Japanese Examined Patent Publication No. 4-36794, Japanese Unexamined Patent Publication No. 8-112687, Japanese Unexamined Patent Publication No. 7-185860 and Japanese Unexamined Patent Publication No. 7-185861, for example, the condensing lens is arranged in the region of the beam waist W. Therefore, the laser beam radius r is changed by the elapsed time from the start of laser beam machining. As a result, the spot diameter on the work is changed. Accordingly, machining can not be uniformly conducted on the entire work region to be machined, which causes a failure in machining. Although it is possible to somewhat absorb fluctuation of the spot diameter by moving the condensing optical system back-and-forth in the region of the beam waist W, in the case of a laser apparatus of relatively high power, fluctuation of the spot diameter is increased. Therefore, the absorption of this fluctuation, by moving the condensing optical system, is limited.

GB 2 354 845 A discloses a laser system of a machine tool in which beam path input signal is produced which is related to changes in the length of the laser beam path when the processing head of the machine tool moves. It also describes to produce signals related to thermal loading of a laser output coupler. Based on the signals a collimator is driven to correct for altered beam characteristics so that the beam size at the focus optic is controlled.

The present invention has been accomplished in view of the above circumstances. An object of the present invention is to provide a laser apparatus capable of uniformly machining a work in a work machining region irrespective of the elapsed time from the start of laser beam machining.

SUMMARY OF THE INVENTION

In order to accomplish the above object, the first aspect provides a laser apparatus beams outputted from the laser beam oscillator, wherein the condensing optical system is positioned on a center line of the laser beams so that a point of intersection between a laser beam propagating curve at the time of the start of outputting the laser beams and a laser beam propagating curve after a sufficiently long period of time has passed for generating a as defined in claim 1.

A shape of the laser beam propagating curve at the time of starting a laser beam output is changed with time into a shape of the laser beam propagating curve after a sufficiently long period of time has passed for generating a thermal lens effect from the start of the laser beam output, which is different from the original shape. However, a point of intersection of these laser beam propagating curves is not changed. Accordingly, in the first aspect, when the condensing optical system, for example, the condenser lens is arranged on the center line of the laser beams so that it can pass through this point of intersection, the laser beam diameters of the laser beams incident upon the condensing optical system can be made constant irrespective of the elapsed time from the start of laser beam machining. Therefore, a spot diameter of the laser beams on a work can be made constant. Accordingly, the work can be uniformly machined in the work machining region irrespective of the elapsed time from the start of laser beam machining.

The second aspect provides a laser apparatus, according to the first aspect, further comprising an optical path length maintaining means for maintaining a length of the optical path from the laser beam oscillator to the condensing optical system to be constant.

Usually, the condensing optical system is attached to a machining head provided in the laser machine of the laser beam apparatus. Therefore, the condensing optical system is integrally moved together with the machining head. In the second aspect, when the optical path length maintaining means for maintaining an optical path length constant is provided, movements of the machining head and the condensing optical system caused by the progress of machining a work can be absorbed. Therefore, irrespective of the grade of the progress of machining the work, the optical path length can be maintained constant. Due to this, the spot diameter of the laser beam on the work can be made constant and machining can be uniformly conducted in the work machining region. In this connection, it is preferable that the optical path length maintaining means is provided with at least two reflecting mirrors. Due to this, the optical path maintaining means can be easily formed without changing the laser beam radius and the diffusion angle.

The third aspect provides a laser apparatus according to the first or the second aspect, further comprising a collimating means arranged between the laser beam oscillator and the condensing optical system.

In the third aspect, at the rear of the collimating means, the laser beam propagating curve at the time of starting a laser beam output and the laser beam propagating curve after a sufficiently long period of time has passed for generating a thermal lens effect relatively gently cross each other. Accordingly, it is possible to form a region, in which the laser beam radii r are very close, in a wide range. That is, an allowance can be given to a position at which the condensing optical system should be arranged. Therefore, even when the condensing optical system is moved a little, a change in the spot diameter of the laser beams on the work can be minimized. It is preferable that an absolute value of a difference between the laser beam propagating curves is approximately 10% in a region where the laser beam radii r are very close.

The fourth aspect provides a laser apparatus according to the third aspect, wherein the collimating means includes at least one spherical mirror, ellipsoidal mirror, parabolic mirror and/or lens.

That is, in the fourth aspect, a region in which the laser beam radii r are very close can be formed in a wide range by a relatively simple structure.

The fifth aspect provides a laser apparatus as defined in claim 5.

In the fifth aspect, laser beam propagating curves, the shapes of which are the same, can be obtained at the rear of the diffusion angle changing means at the time of the start of the laser beam output and after a sufficiently long period of time has passed for generating the thermal lens effect. Therefore, a laser beam radius, of the laser beam incident upon the condensing optical system, can be always maintained constant. Therefore, the spot diameter of the laser beams on the work can be also maintained constant. Accordingly, irrespective of the elapsed time from the start of laser beam machining, the work can be uniformly machined in the machining region. It is preferable that, for example, a variable radius of curvature mirror, that is, a variable curvature mirror, or a movable collimator unit is employed for the beam diffusion angle changing means.

The sixth aspect provides a laser apparatus as defined in claim 6. When the laser apparatus is used over a long period of time, the output mirror and/or the rear mirror in the laser beam oscillator is contaminated and behavior of the laser beam propagating curve is changed. However, in the sixth aspect, while consideration is previously being given to the contamination of the output mirror and others, the condensing optical system is arranged. Accordingly, while an influence of the contamination of the output mirror and others given to the laser beam propagating curve is being minimized, the work can be uniformly machined in the work machining region.

According to each aspect described above, it is possible to provide a common advantage that the work can be uniformly machined in the work machining region irrespective of the elapsed time from the start of laser beam machining.

Further, according to the second aspect, it is possible to provide an advantage that movements of the machining head and the condensing optical system caused by the progress of machining the work can be absorbed.

Further, according to the third aspect, it is possible to provide an advantage that a region in which the laser beam radii r are very close can be formed in a wide range.

Further, according to the fourth aspect, it is possible to provide an advantage that a region in which the laser beam radii r are very close can be formed in a wide range by a relatively simple structure.

Further, according to the fifth aspect, it is possible to provide an advantage that a laser beam radius of the laser beams incident upon the condensing optical system can be made to be always constant.

Further, according to the sixth aspect, it is possible to provide an advantage that while an influence of the contamination of the output mirror and others given to the laser beam propagating curve is being minimized, the work can be uniformly machined in the work machining region.

These and other objects, features and advantages of the present invention will be more apparent in light of the detailed description of exemplary embodiments thereof as illustrated by the drawings.

BRIEF DESCRIPTION OF THE DRAWINGS

In the drawings:

Fig. 1 is a schematic view showing a laser apparatus according to the present invention;
Fig. 2 is a view showing a control unit in detail;
Fig. 3 is a schematic view of a shape of laser beams outputted from a laser beam oscillator;
Fig. 4 is a view showing a relation between an optical path length and a laser beam radius according to the first embodiment of the present invention;
Fig. 5 is a view showing a map of the optical path length L1;
Fig. 6 is another view showing a relation between an optical path length and a laser beam radius;
Fig. 7a is the similar view as that of Fig. 4 showing a relation between an optical path length and a laser beam radius according to the third embodiment of the present invention;
Fig. 7b is another view showing a relation between an optical path length and a laser beam radius;
Fig. 8 is the similar view as that of Fig. 4 showing a relation between an optical path length and a laser beam radius according to the third embodiment of the present invention;
Fig. 9 is a view showing a map of curvature;
Fig. 10 is the similar view as that of Fig. 4 showing a relation between an optical path length and a laser beam radius according to the fourth embodiment of the present invention; and
Fig. 11 is a view showing a relation between an optical path length and a laser beam radius in a laser apparatus of the prior art.

DETAILED DESCRIPTION

Referring to the accompanying drawings, an embodiment of the present invention will be explained below. In the following drawings, like reference characters are used to indicate like parts. In order to facilitate understanding, a scale is appropriately changed to these drawings.

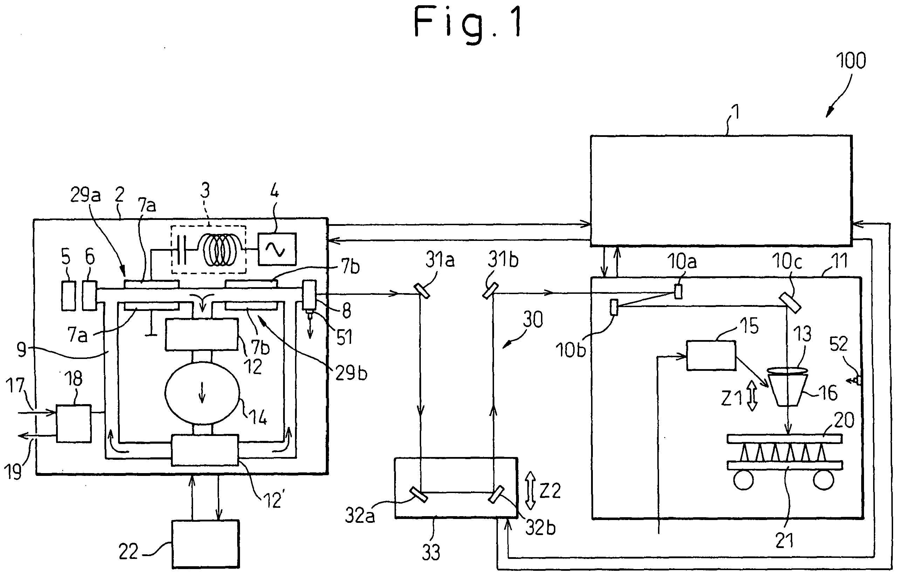

Fig. 1 is a schematic view of a laser apparatus according to the present invention. A laser apparatus 100 of the present invention is mainly applied to the working of metal. The laser apparatus 100 includes: a laser beam oscillator 2; a laser machine 11; and an optical path maintaining mechanism section 30. As shown in Fig. 1, these laser beam oscillator 2, laser machine 11 and optical path maintaining mechanism section 30 are electrically connected to each other via a control unit 1.

The laser beam oscillator 2 is a laser gas oscillator of a relatively high power which is of the induction discharge excited type. For example, the laser beam oscillator 2 is a carbon dioxide laser, the capacity of which is not less than 1 kW. The laser beam oscillator 2 includes an electrical discharge tube 9 connected to a laser gas pressure control system 18. The laser gas pressure control system 18 can supply laser gas to the electrical discharge tube 9 via a laser gas supply hole 17 and discharge the laser gas from the electrical discharge tube 9 via a laser gas discharge hole 19. At one end portion of the electrical discharge tube 9, a rear mirror 6 (an inside resonator mirror) not having a partial permeable property is provided. At the other end portion of the electrical discharge tube 9, an output mirror 8 having a partial permeable property is provided. The output mirror 8 is made of ZnSe. An inner face of the output mirror 8 is coated with a partially reflecting coating. An outer face of the output mirror 8 is coated with a totally reflecting coating. On the back face of the rear mirror 6, a laser power sensor 5 is arranged. As shown in the drawing, two electrical discharge sections 29a, 29b are provided in an optical resonance space located between the rear mirror 6 and the output mirror 8.

Each electrical discharge section 29a, 29b includes a pair of electrical discharge electrodes 7a, 7b which are arranged in such a manner that the electrical discharge tube 9 is interposed between the pair of electrical discharge electrodes 7a, 7b. The sizes of these electrical discharge electrodes 7a, 7b are the same. On these discharge electrodes 7a, 7b, a dielectric coating is applied. As shown in Fig. 1, the electrical discharge electrode 7a is connected to a laser power source 4 via a matching circuit 3. In this connection, the electrical discharge electrode 7b is connected to the laser power source via the similar matching circuit. However, in order to facilitate understanding, these are not shown in the drawing. These laser power sources are respectively independently controlled, and electric power supplied to the electrical discharge sections 29a, 29b can be freely adjusted.

As shown in the drawing, a blower 14 is arranged in the electrical discharge tube 9. In the upstream and the downstream of the blower 14, heat exchangers 12, 12 are respectively arranged. Further, the laser beam oscillator 2 is connected to a cooling water circulating system 22. Therefore, laser gas in the electrical discharge tube 9 can be appropriately cooled by the cooling water circulating system 22.

Further, as shown in Fig. 1, a temperature sensor 51 for measuring a temperature Q of the output mirror 8 of the laser beam oscillator 2 is arranged in the laser beam oscillator 2. In this connection, in Fig. 1, a highspeed axial-flow-type laser beam oscillator 2 is shown. However, the laser beam oscillator 2 may be another type of laser beam oscillator. For example, the laser beam oscillator 2 may be a triaxial orthogonal type laser beam oscillator or gas slab laser beam oscillator cooled by thermal diffusion.

Laser beams outputted from the output mirror 8 of the laser beam oscillator 2 pass through the optical path length maintaining mechanism 30 described later and are incident upon the laser machine 11. The laser machine 11 includes a plurality of reflecting mirrors for reflecting laser beams which are incident. In the case shown in Fig. 1, the laser machine 11 includes three reflecting mirrors 10a, 10b, 10c. As shown in the drawing, the laser beams reflected on these reflecting mirrors 10a, 10b, 10c pass through the condenser lens 13 and the machining head 16 and are irradiated on a work 20 which is put on a machining table 21. In this case, the condenser lens 13 is made of ZnSe, and both faces of the condenser lens 13 are coated with a total reflection coating. In this connection, although not shown in the drawing, a parabolic mirror may be employed instead of the condenser lens 13.

The work 20 can be positioned at a predetermined position when a position of the machining table 21 is horizontally changed. In the laser machine 11, a positioning sensor 52 is provided for detecting a position of the machining head 16. Further, as shown in Fig. 1, an assist gas supply system 15 is provided in the laser machine 11. Assist gas, sent from an assist gas source (not shown) arranged outside the laser machine 11, is supplied to a desired position of the machining head 16 by the assist gas supply system 15.

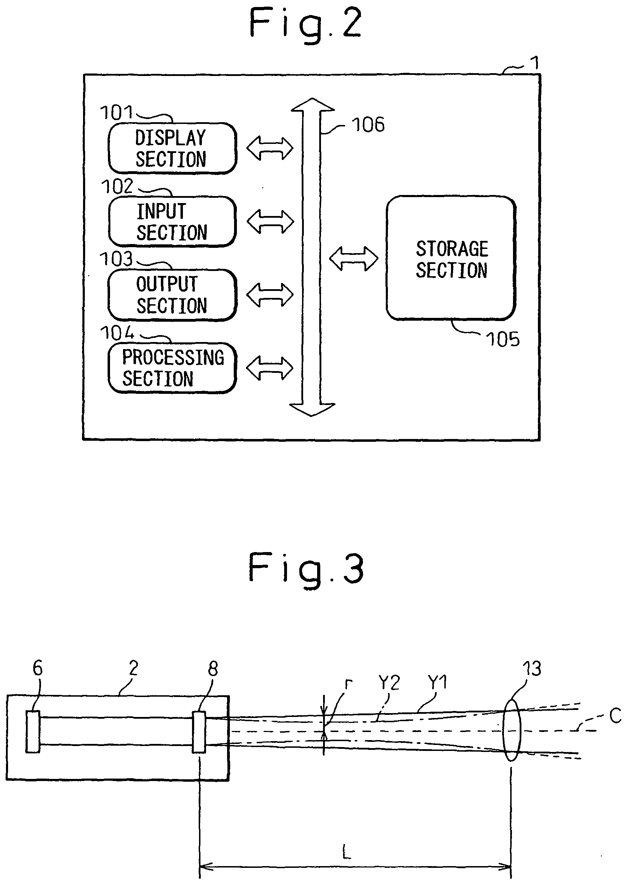

Fig. 2 is a view showing the control unit in detail. As shown in Fig. 2, the control unit 1, by which the laser beam oscillator 2, the laser machine 11 and the optical path length maintaining mechanism section 30 are electrically connected to each other, is a digital computer. This control unit 1 includes: a storage section 105 having ROM (read-only-memory) and RAM (random-access-memory); a processing section 104 such as CPU (microprocessor); an input section 102 which is an input port; and an output section 103 which is an output port which are connected to each other by the bidirectional bus 106. These input section 102 and output section 103 are appropriately connected to predetermined components of the laser beam oscillator 2 and the laser machine 11. For example, the temperature sensor 51 and the position sensor 52 shown in Fig. 1 are respectively connected to the input section 102 of the control unit 1 via AD converters (not shown) corresponding to the temperature sensor 51 and the position sensor 52. A pressure sensor (not shown) to detect the pressure of laser gas in the electrical discharge tube 9 is also connected to the input section 102 of the control unit 1.

At the time of operation of the laser apparatus 100, laser gas is supplied into the electrical discharge tube 9 through the laser gas supply hole 17 by the laser gas pressure control system 18. Next, the laser gas is circulated in a circulating passage including the electrical discharge tube 9 by the blower 14. As shown by arrows in Fig. 1, the laser gas sent out from the blower 14 passes through the heat exchanger 12' so that the compression heat can be removed. Then, the laser gas is supplied to the electrical discharge sections 29a, 29b.

In the electrical discharge sections 29a, 29b, a predetermined voltage, for example, an AC voltage of several hundred kHz to several ten MHz, is applied by the electrical discharge electrodes 7a, 7b. Then, the laser gas is excited by an electrical discharge action and a laser beam is generated. The thus generated laser beam is amplified in an optical resonance space by a well-known principle and the output laser beam is taken out via the output mirror 8. The laser gas, the temperature of which is raised by the electrical discharge action, is cooled by the heat exchanger 12 and returned to the blower 14. In this connection, the cooling water circulating system 22 is operated at this time and the laser gas in the electrical discharge tube 9 is cooled.

As shown in the drawing, the laser beam taken out from the output mirror 8 is sent out from the laser beam oscillator 2 and passes through the optical path length maintaining means 30 and is supplied to the laser machine 11. In the laser machine 11, the laser beam is appropriately reflected by three reflecting mirrors 10a, 10b, 10c. The thus reflected laser beam is condensed by the condenser lens 13 and irradiated to the work 20 via the machining head 16. Due to the foregoing, it becomes possible to machine the work 20 on the machining table 21 and, for example, it becomes possible to cut or weld the work 20 on the machining table 21.

In this connection, Fig. 3 is a schematic view showing a shape of the laser beams outputted from the laser beam oscillator. In order to facilitate understanding, in Fig. 3, the optical path length maintaining mechanism section 30, the reflecting mirrors 10a to 10c and others are omitted and the optical path formed between the output mirror 8 and the condenser lens 13 is drawn into a linear shape. In Fig. 3, the laser beams are outputted from the output mirror 8 of the laser beam oscillator 2 around the center line C. The outside curve Y1 shows a locus of the laser beams at the time of the start of the laser beam output from the laser beam oscillator 2. As shown by the curve Y1, the laser beam amplified between the rear mirror 6 and the output mirror 8 is propagated in a space being accompanied by a minute diffusion angle.

On the other hand, the inside curve Y2 shows a locus of the laser beams after a sufficiently long period of time, for generating a thermal lens effect, has passed from the start of laser beam machining. As can be seen from these curves Y1 and Y2, when the sufficiently long period of time for generating the thermal lens effect has passed from the start of laser beam machining, a region, in which the laser beam radius r is reduced, is generated between the output mirror 8 and the condenser lens 13. In this connection, as shown in Fig. 3, a distance between the output mirror 8 of the laser beam oscillator 2 and the condenser lens 13 is the optical path length L.

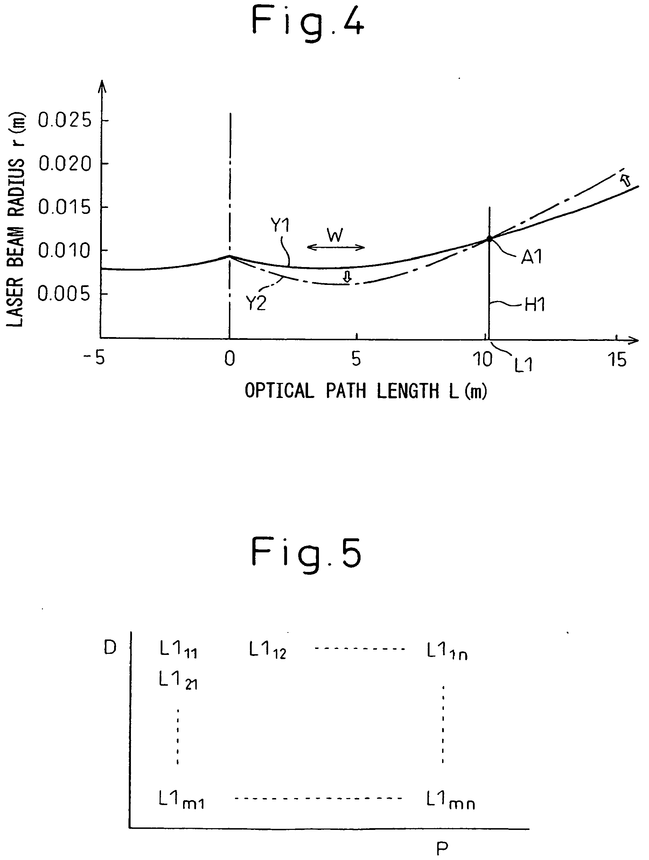

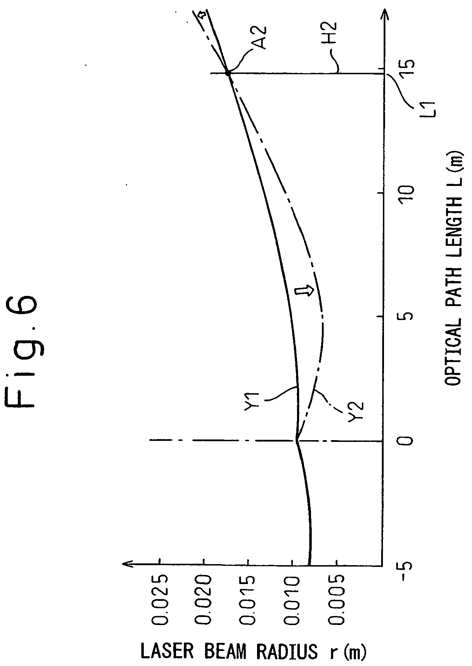

Referring to Fig. 4 which is a view showing a relation between the optical path length L and the laser beam radius r in the first embodiment, the behavior of the above laser beam radius r will be explained below. In Fig. 4, the axis of abscissa shows the optical path length L, which corresponds to the center line C in Fig. 3. The axis of ordinate in Fig. 4 shows the laser beam radius r, which corresponds to a distance in the vertical direction from the center line C to the curves Y1 and Y2 in Fig. 3. In this connection, the origin O of the axis of abscissa in Fig. 4 shows a position of the output mirror 8 of the laser beam oscillator 2. A negative region of the axis of abscissa corresponds to an internal portion of the laser beam oscillator 2. Concerning Figs. 6, 7, 8 and 10 described later, the circumstances are the same.

As can be seen from the laser beam propagating curve Y1 at the time of the start of laser beam output shown in Fig. 4, the laser beam radius r of the laser beams outputted from the output mirror of the laser beam oscillator is approximately 4 mm to 10 mm, that is, approximately 8 mm in Fig. 4. In this connection, the numerical values of the axis of abscissa and the axis of ordinate are shown here as an example. Therefore, it should be noted that the present invention is not limited to the above specific numerical value. Concerning the numerical values of the axis of abscissa and the axis of ordinate in the other drawings, the circumstances are the same.

The laser beam radius r of the outputted laser beams once decreases and then increases exceeding the laser beam radius r at the time of outputting. Therefore, the aforementioned beam waist W exists. As shown in Fig. 4, in the beam waist W, when a sufficiently long period of time for generating a thermal lens effect has passed, the laser beam propagating curve Y1 is further curved downward as shown by the arrow. Concerning this matter, refer to the laser beam propagating curve Y2. In other words, in the beam waist W, the beam radius r is reduced according to the elapsed time from the start of outputting the laser beams.

In this connection, as shown in Fig. 4, the laser beam propagating curves Y1 and Y2 cross each other at the point A1 of intersection. In a region located in the positive direction of the axis of abscissa with respect to this point A1 of intersection, the laser beam radius r is increased according to the elapsed time from the start of outputting the laser beams. That is, the laser beam radius r is reduced in a region located in the negative direction of the axis of abscissa with respect to the point A1 according to the elapsed time, and the laser beam radius r is increased in a region located in the positive direction of the axis of abscissa with respect to the point A1 according to the elapsed time.

In other words, the laser beam radius r of the laser beams at the point A1 of intersection does not change irrespective of the elapsed time from the start of outputting the laser beams. Accordingly, when the condenser lens 13 is positioned at a position on the axis of abscissa corresponding to the point A1 of intersection, a spot diameter on the work 20 is not changed irrespective of the elapsed time from the start of outputting the laser beams. Therefore, in the present invention, the condenser lens 13, the center of which is located on the axis of abscissa, is arranged along the line segment H1 which passes through the point A1 of intersection and is perpendicular to the axis of abscissa.

The coordinates of the axis of abscissa of the point L1, at which this line segment H1 crosses the axis of abscissa, corresponds to the optical path length L1 between the condenser lens 13 located at this position and the output mirror 8. As shown in Fig. 5, this optical path length L1 is determined by the output P of the laser beam oscillator 2 and the diameter D of the output mirror 8. This optical path length L1 is previously determined by an experiment as a function of the output P and the diameter D of the output mirror 8 and previously stored in the storage section 105 of the control unit 1 in the form of a map. Accordingly, in the present invention, according to the map shown in Fig. 5, the condenser lens 13 can be easily positioned at a position (the optical path length L1) corresponding to the point A1 of intersection. In the embodiment shown in Fig. 4, the optical path length L1 is approximately 10 m.

In the case where the condenser lens 13 is arranged at the position of the optical path length L1, both the laser beam radius r of the laser beams incident upon the condenser lens 13 at the time of the start of laser beam machining and that at the time after a sufficiently long period of time for generating the thermal lens effect has passed after the start of outputting the laser beams are equal to each other. That is, the laser beam radius r of the laser beams incident upon the condenser lens 13 becomes constant irrespective of the elapsed time from the start of laser beam machining. Therefore, the spot diameter on the work 20 of the laser beams irradiated from the machining head 16 via the condenser lens 13 is not changed irrespective of the elapsed time from the start of laser beam machining. Therefore, according to the present invention, laser beam machining can be uniformly conducted on the entire region of the work 20 to be machined.

In this connection, the laser beam propagating curves Y1 and Y2 in Fig. 4 are drawn on the assumption that the condenser lens 13 is not arranged at the position of the optical path length L1. Accordingly, the curves Y1 and Y2 are diffused at the rear of the line segment H1. Concerning Figs. 6, 7 and 8 described later, the circumstances are the same.

In Fig. 4, the laser beam propagating curve Y1 at the time of the start of laser beam machining is provided with the beam waist W. However, in some cases, no beam waist W appears at the time of the start of laser beam machining. Fig. 6 is a view, which is drawn in the same manner as that of Fig. 4, showing a relation between the optical path length L and the laser beam radius r in this case. In Fig. 6, the laser beam propagating curve Y1 at the time of the start of laser beam machining is gradually increased after the laser beams have been outputted from the output mirror 8. Thus, in Fig. 6, the laser beam propagating curve Y1 does not have the beam waist W or seldom has the beam waist W. Even in this case, when a certain period of time has passed after the start of laser beam machining, the thermal lens effect is generated, and the laser beam propagating curve Y1 is curved as shown by the laser beam propagating curve Y2 so that the beam waist W can be provided.

Even in this case, in the same manner as that described before, the point A2 of intersection exists at which the laser beam radius r does not change. Therefore, when the condenser lens 13 is positioned at a position corresponding to this point A2 of intersection, the same effect as that described before can be provided.

Explanations will be made below referring again to Fig. 1. The optical path length maintaining mechanism section 30 is arranged between the laser beam oscillator 2 and the laser machine 11. The optical path length maintaining mechanism section 30 includes: a pair of upper reflecting mirrors 31a, 31b fixed at predetermined positions; and a pair of lower reflecting mirrors 32a, 32b fixed to the movable table 33. As shown in the drawing, the laser beams outputted from the output mirror 8 of the laser beam oscillator 2 are reflected on one of the upper reflecting mirrors 31a and then reflected on the lower reflecting mirrors 32a, 32b, which are arranged on the movable table 33, and then reflected on the other upper reflecting mirror 31b. After that, the laser beams are incident upon the laser machine 11.

By a well-known means, for example, by an actuator, the movable table 33 can be moved in the direction Z2 together with the lower reflecting mirrors 32a, 32b. As can be seen from Fig. 1, this direction Z2 is parallel with the laser beams propagating between the upper reflecting mirror 31a and the lower reflecting mirror 32a and the laser beams propagating between the upper reflecting mirror 31b and the lower reflecting mirror 32b.

In this connection, when the work 20 is machined, for example, when the work 20 is cut or welded, the machining head 16 is moved in the direction Z1 according to the degree of progress of machining conducted on the work 20. This direction Z1 is parallel with the direction Z2 described before. As the condenser lens 13 is provided in the machining head 16 of the laser machine 11, when the machining head 16 is moved, the condenser lens 13 is also moved being integrated with the machining head 16. Therefore, the optical path length L between the output mirror 8 and the condenser lens 13 is changed. This change in the optical path length L is expressed by a change in the line segment H1 in Fig. 4 from the point L1 shown in the drawing in the positive and the negative direction of the axis of abscissa. When the optical path length L is changed, the laser spot diameter of the laser beams on the work 20 is also changed. Due to the foregoing, the accuracy of machining the work 20 is changed in the machining region.

At the time of operation of the laser apparatus 100, according to the initial position of the machining head 16 previously stored in the storage section 105, a movement of the machining head 16 from the initial position and its moving direction are detected by the position sensor 52 at any time. As the condenser lens 13 is attached to the machining head 16, the movement of the machining head 16 from the initial position and the moving direction correspond to the movement and the moving direction of the condenser lens 13. In this connection, the position sensor 52 may directly detect the movement and the moving direction of the condenser lens 13.

The movement and the moving direction of the machining head 16 are supplied to the control unit 1. In the control unit 1, according to the movement and the moving direction of the machining head 16, a movement and a moving direction of the movable table 33 are determined, and the movable table 33 is moved in the direction Z2 together with the lower reflecting mirrors 32a, 32b. In the embodiment shown in the drawing, the moving direction of the movable table 33 is opposite to the moving direction of the machining head 16, and the movement of the movable table 33 is half of the movement of the machining head 16. When the movable table 33 is moved according to the movement of the machining head 16, the optical path length L between the output mirror 8 and the condenser lens 13 can be maintained constant irrespective of the degree of progress of machining the work 20. That is, in the present invention which is provided with the optical path length maintaining mechanism section 30, even when the machining head 16 and the condenser lens 13 are moved at the time of laser beam machining, the movement can be absorbed and the optical path length L1 can be maintained constant. That is, according to the present invention, the laser spot diameter of the laser beams on the work 20 can be maintained constant. Therefore, the work 20 can be more uniformly machined over the entire machining region.

In the first embodiment described above, the condenser lens 13 is positioned according to the determined optical path length L1. However, when only the movable table 33 of the optical path length maintaining section 30 is moved, the optical path length L may be set at the optical path length L1 without moving the condenser lens 13 from its initial position. In this case, as the optical path length maintaining mechanism section 30 is arranged outside the laser machine 11, the optical path length L1 can be easily and quickly set as compared with a case in which a position of the condenser lens 13 in the laser machine 11 is changed.

Another optical path length maintaining means may be provided for maintaining the optical path length L constant when the work 20 is moved in the laser machine according to movements of the condenser lens 13 and the machining head 16.

Next, in the second embodiment of the present invention, a collimator system 60 is arranged on the optical path length L between the output mirror 8 and the condenser lens 13. For example, this collimator system 60 includes a convex mirror and concave mirror. In Fig. 1, the reflecting mirrors 10a, 10b respectively correspond to the convex mirror 61 and the concave mirror 62. These convex mirror 61 and concave mirror 62 are a spherical mirror, an ellipsoidal mirror or a parabolic mirror which are available. When these components are used, the collimator system 60 can be formed as a relatively simple structure.

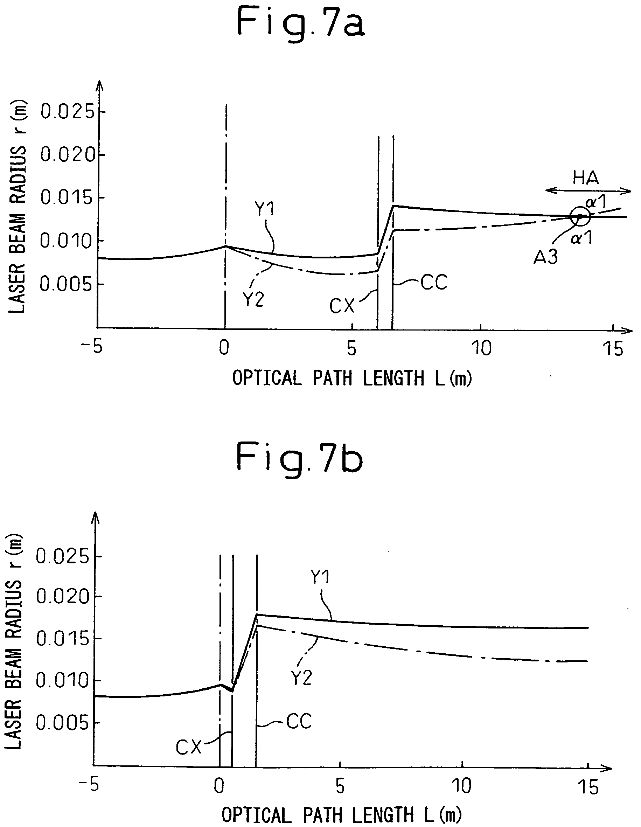

Fig. 7a is the similar view as that shown in Fig. 4 showing a relation between the optical path length and the laser beam radius according to the second embodiment of the present invention provided with the collimator system 60 including the convex mirror 61 and the concave mirror 62. In Fig. 7a, the convex mirror 61 of the collimator system 60 is arranged in such a manner that a center of the convex mirror 61 is set on the axis of abscissa on the line segment CX which is perpendicular to the axis of abscissa. The concave mirror 62 of the collimator system 60 is arranged in such a manner that a center of the concave mirror 62 is set on the axis of abscissa on the line segment CC which is located at the rear or downstream of the convex mirror 61 and perpendicular to the axis of abscissa.

In Fig. 7a, as shown by the laser beam propagating curve Y1, after the laser beam radius r has passed through the convex mirror 61 on the line segment CX, it quickly increases. Next, when the laser beam leaves the concave mirror 62 of the collimator system 60, the laser beam propagating curve of the laser beam radius r mainly becomes parallel with the axis of abscissa. In the same manner, the laser beam propagating curve Y2, which is a curve after a sufficiently long period of time for generating the thermal lens effect has passed, mainly becomes parallel with the axis of abscissa after it leaves the collimator system 60.

Strictly speaking, the laser beam propagating curves Y1 and Y2 after the collimator system 60 are not perfectly parallel with the axis of abscissa. Therefore, these laser beam propagating curves Y1 and Y2 relatively gently cross each other. That is, these laser beam propagating curves Y1 and Y2 cross each other so that an obtuse angle $\alpha$1 can be formed in the direction of the axis of abscissa. Concerning this matter, refer to Fig. 7a. At the point A3 of intersection of these laser beam propagating curves Y1 and Y2, the laser beam radius r is not changed by the thermal lens effect. Therefore, in the same manner as that of the first embodiment, the condenser lens 13 can be positioned at a position on the axis of abscissa corresponding to the point A3 of intersection.

Further, as shown in the drawing, in a predetermined region HA before and after the point A3 of intersection of the curves Y1 and Y2, the curves Y1 and Y2 cross each other forming the obtuse angle $\alpha$1. Therefore, it can be judged that the laser beam radius r is substantially maintained constant. The region HA is selected so that the work 20 can be well machined when the condenser lens 13 is positioned in this region HA. In a preferred embodiment, an absolute value of the difference between the laser beam radiuses r of the curves Y1 and Y2 is not more than 10% of the original laser beam radius r.

That is, in the second embodiment of the present invention, even when the condensing lens 13 is positioned anywhere, as long as the position is located in the region HA, it is possible to machine the work 20 to within a predetermined machining accuracy. That is, in the second embodiment, an allowance can be given to the position where the condenser lens 13 is arranged. As a result, even when the condenser lens 13 is moved in the direction Z1 together with the machining head 16 at the time of machining the work 20, a change in the spot diameter on the work 20 can be minimized. Therefore, machining can be relatively uniformly conducted upon the entire region of the work 20 to be machined.

In this connection, the collimator system 60 including the convex mirror 61 and the concave mirror 62 must be positioned at a position distant from the output mirror 8 by a certain distance. Fig. 7b is another view showing a relation between the optical path length and the laser beam radius. As shown in Fig. 7b, in the case where the convex mirror 61 and the concave mirror 62 are respectively positioned on the line segments CX and CC so that the convex mirror 61 and the concave mirror 62 can be adjacent to the output mirror 8, no point of intersection exists at which the curves Y1 and Y2 cross each other. Therefore, it is impossible to specify a position where the condenser lens 13 should be positioned. For the above reasons, it is necessary to position the collimator system 60, which includes the convex mirror 61 and the concave mirror 62, at a position distant from the output mirror 8 by a certain distance. In the embodiment shown in Fig. 7a, it is necessary to position the collimator system 60 at a position distant from the output mirror 8 by about 5 m.

In this embodiment, instead of the concave mirror 62 and the convex mirror 61, collimation lenses may be provided. In the case of employing the collimation lenses for the collimator system 60, these collimation lenses are arranged on the same line. Of course, the collimator system 60 may be formed by combining the concave mirror 62 and the convex mirror 61, which are described before, with the collimation lens.

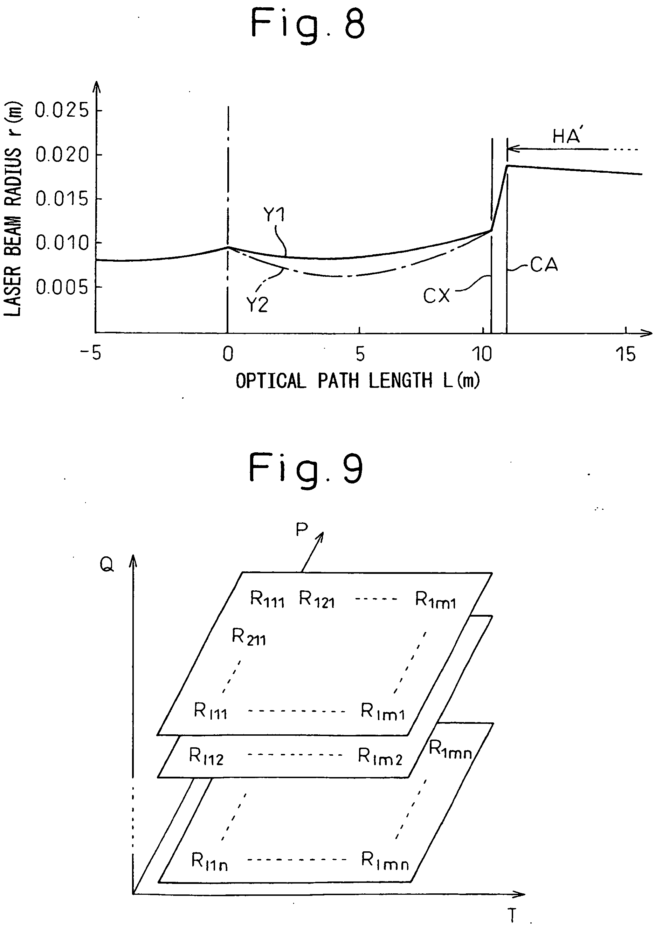

Fig. 8 is the similar view as that shown in Fig. 4 showing a relation between the optical path length and the laser beam radius according to the third embodiment of the present invention. In Fig. 8, the convex mirror 61 is arranged on the line segment CX, and a variable curvature mirror 65 or a variable radius of curvature mirror 65 is arranged on the line segment CA located after or downstream of the line segment CX. The convex mirror 61 and the variable curvature mirror 65 are arranged corresponding to the reflecting mirrors 10a, 10b in Fig. 1. The variable curvature mirror 65 is adjusted so that the curvature or radius of curvature can be changed through the control unit 1. In the third embodiment, the condenser lens 13 may be positioned anywhere between the variable curvature mirror 65 and the work 20. In other words, the variable curvature mirror 65 is arranged between the output mirror 8 and the condenser lens 13.

As shown by the curve Y1 in Fig. 8, the laser beam radius r of the laser beams, which have passed through the convex mirror 61 on the line segment CX, is sharply increased and incident upon the variable curvature mirror 65 on the line segment CA. The variable curvature mirror 65 may function in the same manner as that of the concave mirror 62. Therefore, the curve of the laser beam radius r of the laser beams mostly becomes parallel with the axis of abscissa after the variable curvature mirror 65.

On the other hand, when a certain period of time has passed from the start of outputting the laser beams, the curve Y1 is curved toward the curve Y2 by the thermal lens effect. In the third embodiment, the variable curvature mirror 65, which is located on the line segment CA, is adjusted at any time by the control unit 1. By this adjustment, the laser beam propagating curve Y2 at the rear of the variable curvature mirror 65 can be made to be equal to the laser beam propagating curve Y1 at the start of outputting the laser beams. That is, when the curvature R or the radius of curvature of the variable curvature mirror 65 is adjusted at any time, the laser beam radius r of the laser beams at the rear of the variable curvature mirror 65 can be made constant.

The thermal lens effect of the output mirror 8 is determined by the output P of the laser beam oscillator 2, the elapsed time T from the start of outputting the laser beams and the temperature Q of the output mirror 8. The output P and the elapsed time T can be easily obtained from the control unit 1 of the laser apparatus 100. The temperature Q of the output mirror is detected by the temperature sensor 51 (shown in Fig. 1) and sent to the control unit 1. The curvature R of the variable curvature mirror 65, by which the laser beam radius r can be maintained to be not changed, can be found by the degree of the thermal lens effect. As shown in Fig. 9, this curvature R is previously found as a function of the elapsed time T and the temperature Q by an experiment and previously stored in the storage section 105 of the control unit 1 in the form of a map. Of course, when consideration is further given to the diameter D of the output mirror 8, the curvature R of the variable curvature mirror 65 may be found.

In the third embodiment of the present invention, the laser beam radius r in the region at the rear of the variable curvature mirror 65 can be maintained constant irrespective of the elapsed time from the start of outputting the laser beams. Accordingly, when the condensing lens 13 is positioned at the rear of the variable curvature mirror 65 on the line segment CA, the spot diameter on the work 20 can be maintained constant irrespective of the elapsed time. As a result, the entire region of the work 20 to be machined can be uniformly machined. In the present embodiment, the condenser lens 13 may be positioned at any position in the region HA' at the rear of the variable curvature mirror 65. That is, in the same manner as that of the second embodiment, an allowance can be given to the position at which the condenser lens 13 is arranged. In this connection, even in the case where the convex mirror 61 is not provided but only the variable curvature mirror 65 is arranged, it is possible to provide the substantially similar effect as that of the third embodiment.

Instead of the variable curvature mirror 65, a movable collimator unit may be used so as to change the diffusion angle of the laser beams. In this case, when the movable collimator unit is used, a map similar to that of Fig. 9, which is related to a movable distance of the movable collimator unit, is used, and the substantially similar effect can be provided by changing the movable distance of the movable collimator unit instead of changing the radius of curvature R.

In this connection, when the laser beam oscillator 2 of the laser apparatus 100 is operated at a relatively high power, for example, at power of not less than 1 kW, a very high intensity of energy is given to the medium of the laser beams. Therefore, various particles such as plasma particles are generated in the laser beam oscillator 2. These particles are attached to a surface of the rear mirror 6 and/or the output mirror 8 in the laser beam oscillator 2. Therefore, surfaces of the rear mirror 6 and the output mirror 8 are contaminated. Due to the contamination, the thermal lens effect is facilitated. Accordingly, the rear mirror 6 and/or the output mirror 8 in the laser beam oscillator 2 is periodically cleaned. Since the behavior of the laser beam propagating curves Y1, Y2 changes right before and right after the cleaning, it is preferable that the condenser lens 13 is positioned while consideration is being given to the contamination of the output mirror 8 caused by the particles.

A focal distance of the output mirror 8 in its specification is expressed by f1. A focal distance according to the thermal lens effect at the initial state at the time of starting the output of the laser beam oscillator 2 is expressed by $f_{H1}$. A focal distance according to the thermal lens effect, which is increased by the contamination caused by particles, is expressed by $f_{H2}$. In this case, the actual focal distance f of the output mirror 8 is expressed by the following expression (1).

$$1/f \ = \ 1/f1 \ + \ 1/f_{H1} \ + \ 1/f_{H2} \qquad (1)$$

Then, the laser beam propagating curve Y1' is found by using the focal distance $f_{H2}$. In this case, the laser beam propagating curve Y1' is at the time of starting the output of the laser beams in a state right before cleaning the surface of the output mirror 8 contaminated by particles. In the same manner, the laser beam propagating curve Y2' is found. In this case, the laser beam propagating curve Y2' is after a sufficiently long period of time has passed for generating the thermal lens effect from the start of outputting the laser beams in a state right before cleaning.

Fig. 10 is the similar view as that of Fig. 4 showing a relation between the optical path length and the laser beam radius. In Fig. 10, the laser beam propagating curves Y1' and Y2' are shown. As shown in Fig. 10, the degree of a downward curve of the laser beam propagating curve Y1', Y2' is larger than that of the curve Y1, Y2 (shown in Fig. 4) before the output mirror 8 is contaminated, that is, right after cleaning or right after replacing the output mirror 8. The line segment H1' which passes through the point A1' of intersection of the curves Y1' and Y2' and is perpendicular to the axis of abscissa, is moved in the direction so that the optical path length L can be reduced as compared with the line segment H1 shown in Fig. 4. That is, the line segment H1, on which the condenser lens 13 is positioned, is moved from the line segment H1 to the line segment H1' according to the degree of progress of the contamination of the output mirror 8. That is, right after cleaning or right after replacing the output mirror 8, even if the condenser lens 13 is positioned at a preferable position (the optical path length L1), when the laser beam oscillator 2 is operated over a long period of time, the spot diameter on the work 20 is changed, and it becomes impossible to uniformly machine the work 20.

Therefore, according to the fourth embodiment of the present invention, the condenser lens 13 is positioned between the line segment H1 right after cleaning or right after replacing the output mirror 8 and the line segment H1' right before cleaning or right before replacing the output mirror 8. In this connection, the optical path length L1' corresponding to the line segment H1' is stored in the storage section 105 of the control unit 1 in the form of the similar map as that of Fig. 5. In this case, compared with a case in which the condenser lens 13 is positioned at a position of the line segment H1 or the condenser lens 13 is positioned on the positive direction side (on the right in Fig. 10) of the line segment H1, the laser beam propagating curve is less affected by the contamination of the output mirror 8 etc.. That is, according to the present embodiment, when an influence of the contamination of the output mirror 8 at the time of using the laser beam oscillator 2 is previously estimated, an influence of the contamination given to the laser beam propagating curve can be minimized.

In this connection, an appropriate combination of the embodiments described above is included in the scope of the present invention. Accordingly, for example, in the case of the fourth embodiment, the following structure may be adopted. The variable curvature mirror 65 is arranged at a position on the axis of abscissa corresponding to the line segment H1', and the condenser lens 13 is arranged at the rear of the variable curvature mirror 65.

The present invention is explained above by referring to typical embodiments. However, it should be noted that variations, omissions and additions can be made, by those skilled in the art, without departing from the scope of the present invention, as defined by the claims.

**Claims**

1. A laser apparatus including a laser beam oscillator (2) and a condensing optical system (13) for condensing a laser beam outputted from the laser beam oscillator (2), wherein an optical path length (L) is defined as a distance between the laser beam oscillator (2) and the condensing optical system (13), and wherein the laser beam's radius (r) varies according to the optical path length (L), to define a laser beam propagating curve, **characterized in that** a first laser beam propagating curve (Y1) is defined by the laser beam's radius (r) at the time of the start of outputting the laser beam, and a second laser beam propagating curve (Y2) is defined by the laser beam's radius (r) after the laser beam has been outputted for a sufficiently long period of time for a thermal lens effect to be generated, wherein the condensing optical system (13) is arranged on a center line (C) of the laser beam at a distance from the laser beam oscillator (2) corresponding to a point (A1) of intersection between the first laser beam propagating curve (Y1) and the second laser beam propagating curve (Y2).

2. A laser apparatus according to claim 1, further comprising an optical path length maintaining means (30) for maintaining a length of the optical path from the laser beam oscillator (2) to the condensing optical system (13) to be constant.

3. A laser apparatus according to claim 1 or 2, further comprising a collimating means (60) arranged between the laser beam oscillator (2) and the condensing optical system (13).

4. A laser apparatus according to claim 3, wherein the collimating means (60) includes at least one spherical mirror, ellipsoidal mirror, parabolic mirror and/or lens.

5. A laser apparatus (100) including a laser beam oscillator (2) and a condensing optical system (13) for condensing a laser beam outputted from the laser beam oscillator (2), wherein an optical path length (L) is defined as a distance between the laser beam oscillator (2) and the condensing optical system (13), and wherein the laser beam's radius (r) varies according to the optical path length (L), to define a laser beam propagating curve, **characterized in that** the laser apparatus (100) further comprises a beam diffusion angle changing means (65) arranged between the laser beam oscillator (2) and the condensing optical system (13), wherein a first laser beam propagating curve (Y1) is defined by the laser beam's radius (r) at the time of the start of outputting the laser beam and a second laser beam propagating curve (Y2) is defined by the laser beam's radius (r) after the laser beam has been outputted for a sufficiently long period of time for a thermal lens effect to be generated, the beam diffusion angle changing means (65) is arranged on a center line (C) of the laser beam at a distance from the laser beam oscillator (2) corresponding to a point (A1) of intersection between the first laser beam propagating curve (Y1) and the second laser beam propagating curve (Y2), and the beam diffusion angle changing means (65) is adapted to control the radius of the laser beam so that the first laser beam propagating curve (Y1) behind the beam diffusion angle changing means (65) is substantially the same as the second laser beam propagating curve (Y2) behind the beam diffusion angle changing means (65).

6. A laser apparatus including a laser beam oscillator (2) and a condensing optical system (13) for condensing laser beams outputted from the laser beam oscillator (2), wherein an optical path length (L) is defined as a distance between the laser beam oscillator (2) and the condensing optical system (13), and wherein the laser beam's radius (r) varies according to the optical path length (L), to define a laser beam propagating curve, **characterized in that** a first laser beam propagating curve (Y1) is defined by the laser beam's radius (r) right after cleaning or replacing an output mirror (8) of the laser beam oscillator (2) and a second laser beam propagating curve (Y2) is defined by the laser beam's radius (r) after the laser beam is subsequently outputted for a sufficiently long period of time for a thermal effect to be generated, and a first face (H1) is defined as being perpendicular to a center line (C) of the laser beam at a distance from the laser beam oscillator (2) corresponding to a first point (A1) of intersection between the first laser beam propagating curve (Y1) and the second laser beam propagating curve (Y2); a third laser beam propagating curve (Y1') is defined by the laser beam's radius at the time of the start of outputting the laser beam and a fourth laser beam propagating curve (Y2') is defined by the laser beam's radius after the laser beam is subsequently outputted for the sufficiently long period of time for the thermal effect to be generated before cleaning or replacing the output mirror (8) of the laser beam oscillator (2), and a second face (H1') is defined as being perpendicular to the center line (C) of the laser beam at a distance from the laser beam oscillator (2) corresponding to a second point (A1') of intersection between the third laser propagating curve (Y1') and the fourth laser beam propagating curve (Y2'); and the condensing optical system (13) is arranged between the first face (H1) and the second face (H1').

**Patentansprüche**

1. Laservorrichtung, beinhaltend einen Laserstrahloszillator (2) und ein verdichtendes Optiksystem (13) zum Verdichten eines von dem Laserstrahloszillator (2) ausgegebenen Laserstrahls, wobei eine optische Pfadlänge (L) definiert ist als eine Distanz zwischen dem Laserstrahloszillator (2) und dem verdichtenden Optiksystem (13), und wobei der Laserstrahlradius (r) entsprechend der optischen Pfadlänge (L) variiert, um eine Laserstrahlausbreitungs-Kurve zu definieren, **dadurch gekennzeichnet, dass**
eine erste Laserstrahlausbreitungs-Kurve (Y1) definiert ist durch den Laserstrahlradius (r) zum Zeitpunkt des Beginns des Ausgebens des Laserstrahls, und eine zweite Laserstrahlausbreitungs-Kurve (Y2) definiert ist durch den Laserstrahlradius (r), nachdem der Laserstrahl für einen zum Erzeugen eines thermischen Linseneffekts ausreichend langen Zeitraum ausgegeben wurde,
wobei das verdichtende Optiksystem (13) an einer Mittellinie (C) des Laserstrahls bei einer Distanz von dem Laserstrahloszillator (2) entsprechend zu einem Schnittpunkt (A1) zwischen der ersten Laserstrahlausbreitungs-Kurve (Y1) und der zweiten Laserstrahlausbreitungs-Kurve (Y2) angeordnet ist.

2. Laservorrichtung nach Anspruch 1, weiter umfassend ein optisches Pfadlängenerhaltemittel (30) zum Erhalten einer Länge des optischen Pfads von dem Laserstrahloszillator (2) zu dem verdichtenden Optiksystem (13), sodass diese konstant ist.

3. Laservorrichtung nach Anspruch 1 oder 2, weiter umfassend ein zwischen dem Laserstrahloszillator (2) und dem verdichtenden Optiksystem (13) angeordnetes Kollimatormittel (60).

4. Laservorrichtung nach Anspruch 3, wobei das Kollimatormittel (60) wenigstens einen von einem kugelförmigen Spiegel, ellipsoidenförmigen Spiegel, parabelförmigen Spiegel und/oder Linse beinhaltet.

5. Laservorrichtung (100), beinhaltend einen Laserstrahloszillator (2) und ein verdichtendes Optiksystem (13) zum Verdichten eines von dem Laserstrahloszillator (2) ausgegebenen Laserstrahls, wobei eine optische Pfadlänge (L) definiert ist als eine Distanz zwischen dem Laserstrahloszillator (2) und dem verdichtenden Optiksystem (13), und wobei der Laserstrahlradius (r) entsprechend der optischen Weglänge (L) variiert, um eine Laserstrahlausbreitungs-Kurve zu definieren, **dadurch gekennzeichnet, dass**
die Laserstrahlvorrichtung (100) weiter ein zwischen dem Laserstrahloszillator (2) und dem verdichtenden Optiksystem (13) angeordnetes Strahlausbreitungswinkeländerungsmittel (65) umfasst, wobei
eine erste Laserstrahlausbreitungs-Kurve (Y1) definiert ist durch den Laserstrahlradius (r) zum Zeitpunkt des Beginns des Ausgebens des Laserstrahls und eine zweite Laserstrahlausbreitungs-Kurve (Y2) definiert ist durch den Laserstrahlradius (r), nachdem der Laserstrahl für einen zum Erzeugen eines thermischen Linseneffekts ausreichend langen Zeitraum ausgegeben wurde,
das Strahlausbreitungswinkeländerungsmittel (65) an einer Mittellinie (C) des Laserstrahls bei einer Distanz von dem Laserstrahloszillator (2) entsprechend zu einem Schnittpunkt (A1) zwischen der ersten Laserstrahlausbreitungs-Kurve (Y1) und der zweiten Laserstrahlausbreitungs-Kurve (Y2) angeordnet ist, und
das Strahlausbreitungswinkeländerungsmittel (65) eingerichtet ist zum Steuern des Laserstrahlradius, sodass die Laserstrahlausbreitungs-Kurve (Y1) hinter dem Strahlausbreitungswinkeländerungsmittel (65) im Wesentlichen gleich zu der Laserstrahlausbreitungs-Kurve (Y2) hinter dem Strahlausbreitungswinkeländerungsmittel (65) ist.

6. Laservorrichtung, beinhaltenden einen Laserstrahloszillator (2) und ein verdichtenden Optiksystem (13) zum Verdichten von dem Laserstrahloszillator (2) ausgegebenen Laserstrahlen, wobei eine optische Weglänge (L) definiert ist als eine Distanz zwischen dem Laserstrahloszillator (2) und dem verdichtenden Optiksystem (13), und wobei der Laserstrahlradius (r) entsprechend der optischen Weglänge (L) variiert, um eine Laserstrahlausbreitungs-Kurve zu definieren, **dadurch gekennzeichnet, dass**
eine erste Laserstrahlausbreitungs-Kurve (Y1) definiert ist durch den Laserstrahlradius (r) unmittelbar nach einem Reinigen oder Ersetzen eines Ausgabespiegels (8) des Laserstrahloszillators (2) und eine Laserstrahlausbreitungs-Kurve (Y2) definiert ist durch den Laserstrahlradius (r), nachdem der Laserstrahl anschließend für einen zum Erzeugen eines thermischen Effekts ausreichend langen Zeitraum ausgegeben wurde, und eine erste Fläche (H1) definiert ist als senkrecht zu einer Mittellinie (C) des Laserstrahls bei einer Distanz von dem Laserstrahloszillator (2) entsprechend zu einem ersten Schnittpunkt (A1) zwischen der ersten Laserstrahlausbreitungs-Kurve (Y1) und der zweiten Laserstrahlausbreitungs-Kurve (Y2);
eine dritte Laserstrahlausbreitungs-Kurve (Y1') definiert ist durch den Laserstrahlradius zum Zeitpunkt des Beginns des Ausgebens des Laserstrahls und eine vierte Laserstrahlausbreitungs-Kurve (Y2') definiert ist durch den Laserstrahlradius, nachdem der Laserstrahl ausreichend für einen zum Erzeugen des thermischen Effekts langen Zeitraum ausgegeben wurde, bevor der Ausgabespiegel (8) des Laserstrahloszillators (2) gereinigt oder ersetzt wurde, und eine zweite Fläche (H1') definiert ist als senkrecht zu der Mittellinie (C) des Laserstrahls bei einer Distanz von dem Laserstrahloszillator (2) entsprechend zu einem zweiten Schnittpunkt (A1') der dritten Laserstrahlausbreitungs-Kurve (Y1') und der vierten Laserstrahlausbreitungs-Kurve (Y2'); und

das verdichtende Optiksystem (13) zwischen der ersten Fläche (H1) und der zweiten Fläche (H1') angeordnet ist.

## Revendications

1. Appareil laser incluant un oscillateur de faisceau laser (2) et un système optique de condensation (13) pour condenser un faisceau laser délivré en sortie de l'oscillateur de faisceau laser (2), dans lequel une longueur (L) de trajet optique est définie comme une distance entre l'oscillateur de faisceau laser (2) et le système optique de condensation (13), et dans lequel le rayon (r) de faisceau laser varie en fonction de la longueur (L) de trajet optique, pour définir une courbe de propagation de faisceau laser, **caractérisé en ce que**

   une première courbe de propagation (Y1) de faisceau laser est définie par le rayon (r) de faisceau laser au moment du début de la délivrance en sortie du faisceau laser, et une deuxième courbe de propagation (Y2) de faisceau laser est définie par le rayon (r) de faisceau laser après que le faisceau laser a été délivré en sortie sur une période de temps suffisamment longue pour qu'un effet de lentille thermique soit généré,

   dans lequel le système optique de condensation (13) est agencé sur une ligne centrale (C) du faisceau laser à une distance de l'oscillateur de faisceau laser (2) correspondant à un point (A1) d'intersection entre la première courbe de propagation (Y1) de faisceau laser et la deuxième courbe de propagation (Y2) de faisceau laser.

2. Appareil laser selon la revendication 1, comprenant en outre un moyen de maintien (30) de longueur de trajet optique pour maintenir une longueur du trajet optique de l'oscillateur de faisceau laser (2) jusqu'au système optique de condensation (13) pour qu'elle soit constante.

3. Appareil laser selon la revendication 1 ou 2, comprenant en outre un moyen de collimation (60) agencé entre l'oscillateur de faisceau laser (2) et le système optique de condensation (13).

4. Appareil laser selon la revendication 3, dans lequel le moyen de collimation (60) inclut au moins un miroir sphérique, un miroir ellipsoïdal, un miroir parabolique et/ou une lentille.

5. Appareil laser (100) incluant un oscillateur de faisceau laser (2) et un système optique de condensation (13) pour condenser un faisceau laser délivré en sortie de l'oscillateur de faisceau laser (2), dans lequel une longueur (L) de trajet optique est définie comme une distance entre l'oscillateur de faisceau laser (2) et le système optique de condensation (13), et dans lequel le rayon (r) de faisceau laser varie en fonction de la longueur (L) de trajet optique, pour définir une courbe de propagation de faisceau laser, **caractérisé en ce que**

   l'appareil laser (100) comprend en outre un moyen de changement (65) d'angle de diffusion de faisceau agencé entre l'oscillateur de faisceau laser (2) et le système optique de condensation (13), dans lequel

   une première courbe de propagation (Y1) de faisceau laser est définie par le rayon (r) de faisceau laser au moment du début de la délivrance en sortie du faisceau laser, et une deuxième courbe de propagation (Y2) de faisceau laser est définie par le rayon (r) de faisceau laser après que le faisceau laser a été délivré en sortie sur une période de temps suffisamment longue pour qu'un effet de lentille thermique soit généré,

   le moyen de changement (65) d'angle de diffusion de faisceau est agencé sur une ligne centrale (C) du faisceau laser à une distance de l'oscillateur de faisceau laser (2) correspondant à un point (A1) d'intersection entre la première courbe de propagation (Y1) de faisceau laser et la deuxième courbe de propagation (Y2) de faisceau laser, et

   le moyen de changement (65) d'angle de diffusion de faisceau est adapté à contrôler le rayon du faisceau laser de façon à ce que la première courbe de propagation (Y1) de faisceau laser derrière le moyen de changement (65) d'angle de diffusion de faisceau soit sensiblement la même que la deuxième courbe de propagation (Y2) de faisceau laser derrière le moyen de changement (65) d'angle de diffusion de faisceau.

6. Appareil laser incluant un oscillateur de faisceau laser (2) et un système optique de condensation (13) pour condenser des faisceaux laser délivrés en sortie de l'oscillateur de faisceau laser (2), dans lequel une longueur (L) de trajet optique est définie comme une distance entre l'oscillateur de faisceau laser (2) et le système optique de condensation (13), et dans lequel le rayon (r) de faisceau laser varie en fonction de la longueur (L) de trajet optique, pour définir une courbe de propagation de faisceau laser, **caractérisé en ce que**

   une première courbe de propagation (Y1) de faisceau laser est définie par le rayon (r) de faisceau laser juste après le nettoyage ou le remplacement d'un miroir (8) de sortie de l'oscillateur de faisceau laser (2), et une deuxième courbe de propagation (Y2) de faisceau laser est définie par le rayon (r) de faisceau laser après que le faisceau laser a été sensiblement délivré en sortie sur une période de temps suffisamment longue pour qu'un effet thermique soit généré, et une première face (H1) est définie comme étant perpendiculaire à une ligne centrale (C) du faisceau laser à une distance de l'oscillateur de faisceau laser (2) correspondant à un premier point (A1) d'intersection entre la première courbe de propagation (Y1) de faisceau laser et la deuxième courbe de propagation (Y2) de faisceau laser ;

une troisième courbe de propagation (Y1') de faisceau laser est définie par le rayon de faisceau laser au moment du début de la délivrance en sortie du faisceau laser, et une quatrième courbe de propagation (Y2') de faisceau laser est définie par le rayon de faisceau laser après que le faisceau laser a été sensiblement délivré en sortie sur la période temps suffisamment longue pour que l'effet thermique soit généré avant le nettoyage ou le remplacement du miroir (8) de sortie de l'oscillateur de faisceau laser (2), et une deuxième face (H1') est définie comme étant perpendiculaire à la ligne centrale (C) du faisceau laser à une distance de l'oscillateur de faisceau laser (2) correspondant à un deuxième point (A1') d'intersection entre la troisième courbe de propagation (Y1') de faisceau laser et la quatrième courbe de propagation (Y2') de faisceau laser ; et

le système optique de condensation (13) est agencé entre la première face (H1) et la deuxième face (H1').

# Fig.1

# Fig.2

# Fig.3

# Fig.4

# Fig.5

Fig.6

# Fig.7a

# Fig.7b

# Fig. 8

# Fig. 9

# Fig.10

# Fig.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4036794 A
- JP 8112687 A
- JP 7185860 A
- JP 7185861 A
- GB 2354845 A